# NOUVEAU FASCICULE DE BREVET EUROPEEN

(11) **EP 2 476 922 B3**
(45) Date de publication du présent fascicule: **21.08.2019**
(45) Mention de la délivrance du brevet: 25.05.2016
(21) Numéro de dépôt: 12150962.4
(22) Date de dépôt: 12.01.2012
(51) Int. Cl.: F16B 37/08, F16B 37/04, F16B 7/18, E04F 13/08

(54) **Dispositif de fixation pour un revêtement isolant de bâtiment**
Vorrichtung zum Befestigen einer Dämmverkleidung eines Gebäudes
Device for attaching an insulating building covering

(30) Priorité: 13.01.2011 FR 1150291; 01.09.2011 FR 1157728
(43) Date de publication de la demande: 18.07.2012
(73) Titulaire: Ateliers LR Etanco, 78230 Le Pecq (FR); Knauf Insulation, 10001 Troyes (FR)
(72) Inventeur: Leroy, Alain, 78820 Juziers (FR); Baguari, Abdelkrim, 78200 Mantes la Jolie (FR)
(74) Mandataire: Mazabraud, Xavier

(56) Documents cités:
- EP-A2- 0 921 323
- FR-A1- 2 878 876
- US-A- 3 720 430

## Description

L'invention concerne un dispositif et un système pour la fixation d'un matériau isolant thermique et/ou phonique de bâtiment sur la face intérieure d'une cloison ou d'un mur, cette fixation mettant en oeuvre des supports rigides de part et d'autre du matériau isolant.

En particulier, l'invention concerne un dispositif selon le préambule de la revendication 1. Un tel dispositif est connu du document FR 2 878 876 A1.

Un des moyens d'isoler thermiquement une habitation, ou d'améliorer son isolation phonique, est de disposer sur les faces internes des parois ou murs un matériau peu dense tel qu'une laine de roche ou laine de verre. Ces matériaux isolants, qui sont fournis en rouleaux ou en plaque d'épaisseurs très différentes suivant les besoins, n'ont pas de rigidité suffisante pour être directement appliqués sur les murs, il est nécessaire d'avoir recours à des supports rigides, généralement métalliques, appelés fourrures, pour les soutenir et pour fixer un parement. Une première série de ces supports est d'abord fixée horizontalement sur le mur, le matériau isolant est fixé sur ces supports, puis on applique une seconde série de supports verticalement sur le matériau isolant. Un parement est alors fixé sur la face externe de la seconde série de supports verticaux.

On comprend qu'il est nécessaire d'utiliser des dispositifs de fixation intermédiaires entre les deux séries de support. Ces fixations intermédiaires, qui traversent le matériau isolant, doivent pouvoir être mises en place le plus simplement possible sur les supports et s'adapter facilement à la plus grande gamme d'épaisseurs possible de matériau isolant pour limiter le nombre de pièces en fonction de l'épaisseur du matériau utilisé, ils doivent donc permettre le réglage de l'écartement des deux fourrures. Ils doivent également présenter une bonne résistance aux chocs qui sont susceptibles d'être appliqués au parement une fois posé.

Le document FR 2 785 312 A1 décrit un dispositif de fixation comportant deux pièces, une première pièce comportant une tige crantée et une tête rectangulaire apte à se clipser sur une première fourrure, et une seconde pièce comportant un tube cranté et une tête rectangulaire apte à se fixer sur une seconde fourrure. Les crantages sont discontinus, de sorte que selon la disposition axiale respective des première et seconde pièces, elles peuvent soit coulisser l'une sur l'autre soit être immobilisées en translation quand les crantages sont en prise. Le tube comporte deux méplats permettant d'actionner en rotation le tube et la tête à l'aide d'une clef, ce qui n'est pas pratique.

Le document FR 2 878 876 A1 dévoile un autre dispositif de fixation qui se distingue du précédent en ce que la tête de la seconde pièce est ronde et comporte un levier, la rotation de la tête et du tube étant obtenue en manoeuvrant ce levier. L'immobilisation des deux pièces est obtenue lorsque ce levier est appliqué contre le bord de la seconde fourrure. Ce dispositif de fixation possède une capacité de réglage en écartement très limitée. De plus, lorsqu'il a réglé l'écartement des deux pièces, l'utilisateur ne peut pas savoir sur quelle longueur les crantages sont en prise et donc quelle est la résistance aux chocs de son montage.

Le document FR 2 836 390 A3 divulgue un autre dispositif de fixation qui se distingue des précédents en ce que le coulissement et l'immobilisation des deux pièces l'une par rapport à l'autre est obtenu en ouvrant ou en fermant à la main une mâchoire présente sur la seconde pièce en actionnant des leviers. Ce dispositif de fixation possède une capacité de réglage en écartement très limitée et n'est pas pratique, les leviers se trouvant derrière la seconde fourrure.

L'invention vise à résoudre ces problèmes. A cet effet, elle propose un dispositif pour la fixation de deux objets l'un à l'autre dans une position réglable en écartement, selon la revendication 1.

L'avantage obtenu par la présence de cette troisième pièce et de sa relation de coulissement sur le tube de la première pièce est une grande latitude de réglage de l'écartement des deux pièces et donc des deux fourrures. Ceci permet de limiter le nombre de dispositifs à fabriquer et à mettre à la disposition des utilisateurs en fonction de l'épaisseur de l'isolant à poser.

Avantageusement, la première pièce peut comporter une base plane, le tube s'étendant alors à partir d'une face de cette base et étant ouvert à une première extrémité distante de la base.

La première pièce comporte une base plane de section généralement rectangulaire lui interdisant tout mouvement de rotation lorsqu'elle est clipsée sur la première fourrure.

Avantageusement la troisième pièce peut comporter à une première extrémité une pointe terminale axiale prévue pour perforer un matériau peu dense.

Le matériau isolant peut ainsi être embroché sur la troisième pièce une fois celle-ci immobilisée en translation avec la première pièce.

Selon l'invention, la troisième pièce et la deuxième pièce comportent des moyens qui coopèrent pour clipser axialement l'un sur l'autre et pour les solidariser en rotation.

La troisième pièce du dispositif peut donc être dans un état non lié à la deuxième pièce, par exemple lors de la préparation du montage, ou dans un état relié à la deuxième pièce, par exemple à la suite d'une étape du montage.

Avantageusement, dans un premier mode de réalisation, la deuxième pièce peut comporter une ouverture, pouvant être traversante, prévue pour recevoir la pointe terminale de la troisième pièce, et les moyens de clipsage et de solidarisation en rotation de la deuxième pièce peuvent comporter des languettes résilientes qui s'étendent à l'intérieur de l'ouverture à partir de sa périphérie et possédant un débattement radial.

De plus, les moyens de clipsage de la troisième pièce peuvent comporter une gorge annulaire prévue pour recevoir les languettes résilientes, et les moyens de solidarisation en rotation du tube peuvent comporter des ailettes qui s'étendent radialement sous la pointe terminale, les ailettes étant prévues pour prendre place entre les languettes lors du clipsage.

Dans un second mode de réalisation des moyens de clipsage, la deuxième pièce peut comporter une ouverture, pouvant être traversante, prévue pour recevoir la pointe terminale de la troisième pièce, et les moyens de clipsage et de solidarisation en rotation de la deuxième pièce peuvent comporter des languettes résilientes possédant un débattement radial et des ailettes rigides, ces languettes et ces ailettes s'étendant longitudinalement à l'intérieur de l'ouverture à partir de sa périphérie.

De plus, les moyens de clipsage de la troisième pièce peuvent comporter une gorge annulaire prévue pour recevoir les languettes résilientes, et les moyens de solidarisation en rotation de la troisième pièce peuvent comporter des gorges qui s'étendent à partir de la pointe terminale, les gorges étant prévues pour recevoir les ailettes lors du clipsage.

La partie terminale de la troisième pièce remplit une double fonction :
- comme il a été vu plus haut, la pointe sert à percer le matériau isolant,
- elle sert également à clipser la troisième pièce sur la deuxième pièce en repoussant des languettes présentes dans une ouverture de la tête. Les languettes s'engagent alors dans une gorge présente entre la pointe et le corps de la troisième pièce.

Ce clipsage a deux effets :
- il solidarise axialement la troisième pièce et la deuxième pièce ; une fois le clipsage réalisé, ces éléments sont reliés l'un à l'autre et ne peuvent pas être facilement désolidarisés ;
- il solidarise également ces éléments en rotation, grâce, dans le premier mode de réalisation, à la présence d'ailettes radiales sur la troisième pièce, à proximité de la pointe, qui prennent place entre les languettes ou, dans le second mode de réalisation, à la présence d'ailettes radiales qui s'étendent sur la paroi de l'ouverture de la deuxième pièce et de gorges longitudinales sur et au voisinage de la pointe terminale, les ailettes radiales prenant place dans ces gorges.

Avantageusement, la deuxième pièce peut comporter au moins un moyen de prise qui s'étend en périphérie, permettant à un utilisateur de l'entraîner en rotation, et les moyens de liaison de la deuxième pièce peuvent comprendre une tête qui présente une section circulaire et une gorge de section circulaire sous tête.

La tête et la gorge sous tête de la deuxième pièce présentent chacune une section circulaire afin, comme il sera vu plus bas, de clipser cette deuxième pièce sur une fourrure quelle que soit son orientation axiale et en conservant sa liberté de rotation. Une fois cette deuxième pièce clipsée, sa rotation, en actionnant ses moyens de prise, permet d'immobiliser la deuxième et la troisième pièces sur la première pièce. Ces moyens de prise peuvent comprendre un ou deux leviers qui s'étendent à partir de la périphérie de la deuxième pièce.

Avantageusement, les moyens de liaison de la première pièce peuvent comprendre une tête qui s'étend à partir de la base plane à l'opposé dudit tube et deux gorges sensiblement parallèles situées sur des côtés opposés de ladite tête.

Alternativement, les moyens de liaison de la première pièce peuvent comprendre deux oreilles qui s'étendent à partir de la base plane à l'opposé dudit tube, chaque oreille comprenant deux encoches situées à la jonction de chaque oreille respective et de la base plane.

Avantageusement, la première surface crantée de la première pièce et la seconde surface crantée de la troisième pièce peuvent comporter chacune au moins deux rangées longitudinales de crantages séparées l'une de l'autre par au moins deux gorges longitudinales, de façon que, dans la première position angulaire respective, les rangées de crantages d'une pièce peuvent coulisser dans les gorges de l'autre pièce, et dans la seconde position angulaire respective, les crans des rangées de crantages des deux pièces sont en prise les uns avec les autres.

Les rangées de crantages angulairement discontinus définissent des gorges sur la surface crantée de la première et la troisième pièces, les crantages de l'une des pièces pouvant coulisser dans les gorges de l'autre pièce. Le coulissementdes pièces l'une sur l'autre est obtenu par exemple si l'extension angulaire des rangées de crantages de l'une des pièces est sensiblement égale à l'extension angulaire des gorges de l'autre pièce.

Avantageusement, lesdites première et seconde positions angulaires peuvent être séparées de sensiblement un quart de tour.

Par exemple, chaque rangée de crantage et chaque gorge s'étendent angulairement sur sensiblement 90° (deux rangées de crans et deux gorges) et le blocage s'obtient par une rotation d'un quart de tour, ou sur 60° (trois rangées de crans et trois gorges).

Avantageusement, la première pièce et ladite troisième pièce peuvent comporter en outre des moyens de blocage en rotation respective.

Il est avantageux que la première pièce et/ou la troisième pièce comportent des moyens qui limitent l'extension angulaire de la rotation. En effet, les pièces sont immobilisées en translation lorsque les crans sont en prise, et l'utilisateur peut souhaiter conserver cette immobilisation. Le blocage en rotation provoque leur blocage en translation.

Il est également avantageux de conserver une position angulaire dans laquelle les crans sont totalement en prise l'un sur l'autre, et non marginalement.

L'invention propose plusieurs moyens pour obtenir ce blocage en rotation. Par exemple, les moyens de blocage en rotation respective peuvent comporter au moins une butée, située entre les crans et en limite angulaire desdits crans, de façon à limiter le mouvement angulaire respectif des première et troisième pièces.

Cette disposition permet à l'utilisateur de ressentir le moment où les crans sont en prise sur toute leur extension, et donc la fin du mouvement de rotation mettant en prise les deux pièces. Ceci est particulièrement utile lorsque la troisième pièce est mise en place sur le tube de la première pièce avantembrochage du matériau isolant et clipsage de la deuxième pièce.

De façon alternative, la section d'au moins un cran et la section d'au moins une rainure entre crans des première et troisième pièces peuvent avoir des dimensions qui varient relativement l'une à l'autre de telle sorte que dans une rotation relative dans un sens de verrouillage, ledit cran vient se coincer dans ladite rainure.

Une autre façon d'obtenir le blocage d'une pièce sur l'autre est d'obtenir le coincement progressif des crans d'une pièce dans les rainures entre les crans de l'autre pièce. Il suffit qu'au moins un cran, ou tous les crans d'une rangée, ait une section non constante, soit angulairement (dans ce cas l'extension radiale des crans varie avec l'angle autour de l'axe de la pièce), soit axialement (dans ce cas l'épaisseur des crans varie axialement). Il est évident qu'il existe un grand nombre de possibilités permettant d'obtenir cet effet.

Un autre avantage à la présence de cette dissymétrie est de procurer à l'ensemble constitué par la première et la troisième pièce un sens de rotation unique, appelé sens de verrouillage, la rotation étant bloquée dans le sens inverse.

Avantageusement, le tube peut n'être cranté qu'au voisinage de son extrémité libre distante de la base plane. Il peut comporter un nombre de rangées de crans compris entre cinq et dix, de préférence égal à huit.

Il n'est pas nécessaire que le tube de la première pièce soit cranté sur toute sa longueur, il suffit que la tige crantée de la troisième pièce le soit. Le tube ne possède qu'un nombre limité de crans, égal à N, sur sa surface intérieure, au voisinage de son extrémité libre. On a trouvé qu'un nombre N de crans égal à huit procurait une résistance aux chocs suffisante au parement qui est appliqué à la fourrure extérieure.

Avantageusement, le tube peut déboucher par une ouverture à une seconde extrémité proche de la base, et la tige crantée peut comporter à sa seconde extrémité opposée à la première extrémité une butée d'arrêt circulaire dont le diamètre est compris entre le diamètre intérieurdu tube dans sa partie non crantée et le diamètre de l'espace libre entre les sommets des crantages du tube.

La butée circulaire ne peut pas franchir les crans intérieurs du tube de la première pièce, ce qui a deux conséquences :
- la tige crantée ne peut plus être enfilée dans le tube que par son ouverture dans la base de la première pièce,
- la tige crantée ne peut pas ressortir entièrement par l'extrémité libre du tube. Lorsqu'elle ressort partiellement par sa pointe de cette extrémité libre et que les crans des deux pièces sont mis en prise, les deux pièces sont toujours en prise sur N crans. Ceci exclut donc l'incertitude sur la résistance aux chocs du montage.

Avantageusement, lesdits objets peuvent être des profilés comportant une section transversale en U dont les bords sont repliés l'un vers l'autre, les bords repliés et lesdits moyens de liaison des première et deuxième pièces coopérant pour clipser l'une ou l'autre pièce sur les profilés.

Le dispositif selon l'invention est particulièrement adapté à la fixation relative de deux profilés appelés fourrures, séparés par une couche de matériau isolant thermique et/ou acoustique, une première fourrure fixée au mur, généralement horizontalement, et une deuxième fourrure appliquée contre le matériau isolant, généralement verticalement.

Une fourrure est un profilé, généralement métallique, comportant une section transversale en U comportant une âme et deux flancs parallèles dont les bords sont repliés l'un vers l'autre. Les flancs ont une certaine élasticité leur permettant de s'écarter légèrement l'un de l'autre.

Les moyens de liaison des première et deuxième pièces du dispositif avec une fourrure peuvent comporter :
- Sur la première pièce, une base plane possédant une section sensiblement rectangulaire, à partir de laquelle s'étend une tête (resp. deux oreilles) destinée à prendre place à l'intérieur de la première fourrure et une gorge sous tête se présentant sous la forme de deux rainures parallèles de part et d'autre de la tête (resp. quatre encoches situées à la jonction des oreilles et de la base) ; une dimension transversale de la tête (resp. des oreilles) est légèrement supérieure à l'écartement des bords repliés, et l'écartement du fond des gorges (resp. des encoches) et égal à l'écartement des bords repliés ;
- Sur la deuxième pièce, une tête possédant une section circulaire, destinée à prendre place à l'intérieur de la seconde fourrure, et une gorge sous tête également de section circulaire ; un diamètre de la tête circulaire est légèrement supérieur à l'écartement des bords repliés, et le diamètre des gorges et égal à l'écartement des bords repliés ; l'avantage d'une tête ronde est qu'elle peut être clipsée sur une fourrure quelle que soit son orientation axiale. Sa rotation, généralement d'un quart de tour, immobilise les première et troisième et donc les fourrures l'une par rapport à l'autre.

Une tête (resp. les oreilles) peut être forcée dans la fourrure en jouant sur l'élasticité de ses parois latérales et les bords repliés peuvent s'insérer dans la gorge (resp. les encoches), provoquant le clipsage. Les première et deuxième pièces une fois clipsées peuvent coulisser le long de leur fourrure respective.

L'invention porte également sur un système pour appliquer un matériau isolant sur une paroi pouvant comporter :
- au moins deux profilés,
- au moins un dispositif de fixation selon l'invention pour fixer les deux profilés l'un à l'autre en réglant leur écartement en fonction de l'épaisseur du matériau isolant qui doit être disposé entre les deux profilés.

L'invention porte également sur un kit de fixation pouvant comprendre un dispositif selon l'invention, dans lequel la tige crantée de la troisième pièce est bloquée en rotation à l'intérieur du tube de la première pièce.

En pratique, le dispositif sera livré sous forme de kit, la troisième pièce étant en prise et bloquée en rotation et translation à l'intérieur du tube de la première pièce.

L'invention porte également sur un procédé pour appliquer un matériau isolant sur une paroi utilisant un kit de fixation, pouvant comporter les étapes consistant à :
- clipser la première pièce du dispositif sur un premier profilé,
- extraire partiellement la tige crantée du tube de ladite première pièce par sa première extrémité et la bloquer en lui appliquant un mouvement de rotation,
- embrocher ledit matériau isolant sur la tige crantée et le tube de la première pièce,
- clipser la deuxième pièce sur la pointe terminale de la tige crantée,
- clipser un deuxième profilé sur la deuxième pièce,
- régler l'écartement de la première pièce et de la deuxième pièce en faisant coulisser la tige crantée de la troisième pièce dans le tube de la première pièce,
- bloquer la première pièce et la deuxième pièce en appliquant un mouvement de rotation à la deuxième pièce.

Des modes de réalisation et des variantes seront décrits ci-après, à titre d'exemples non limitatifs, avec référence aux dessins annexés dans lesquels :
Les figures 1 et 2 représentent respectivement une première pièce du dispositif en perspective et en élévation,
La figure 3 représente une variante de tête de fixation de cette première pièce,
Les figures 4 et 5 représentent respectivement une deuxième pièce du dispositif en vue axiale et une troisième pièce en perspective, dans une première variante de leur mode de fixation,
Les figures 6 à 10 représentent respectivement :
   - une vue axiale et une vue en coupe d'une deuxième pièce du dispositif,
   - une troisième pièce du dispositif, en perspective, en coupe axiale et en coupe transversale, dans une deuxième variante de leur mode de fixation,
Les figures 11 et 12 représentent respectivement :
   - une coupe transversale des crans de la première et de la troisième pièces en prise les une sur les autres,
   - une troisième pièce à l'intérieur d'une première pièce, en coupe axiale,
La figure 13 représente une deuxième pièce en prise sur une fourrure,

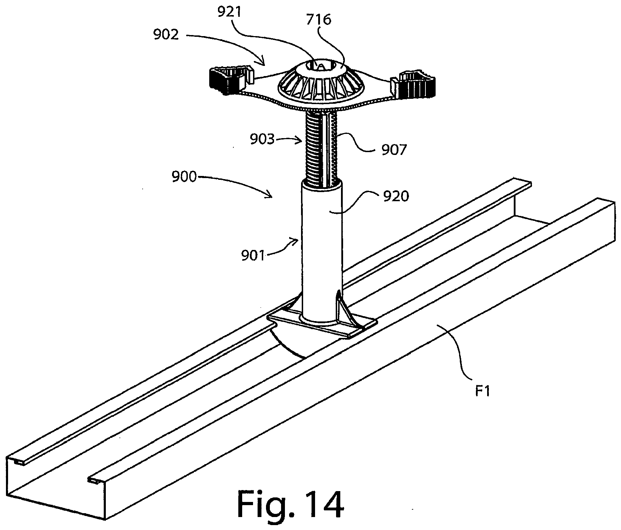

La figure 14 représente en perspective, un dispositif fixé sur une fourrure.

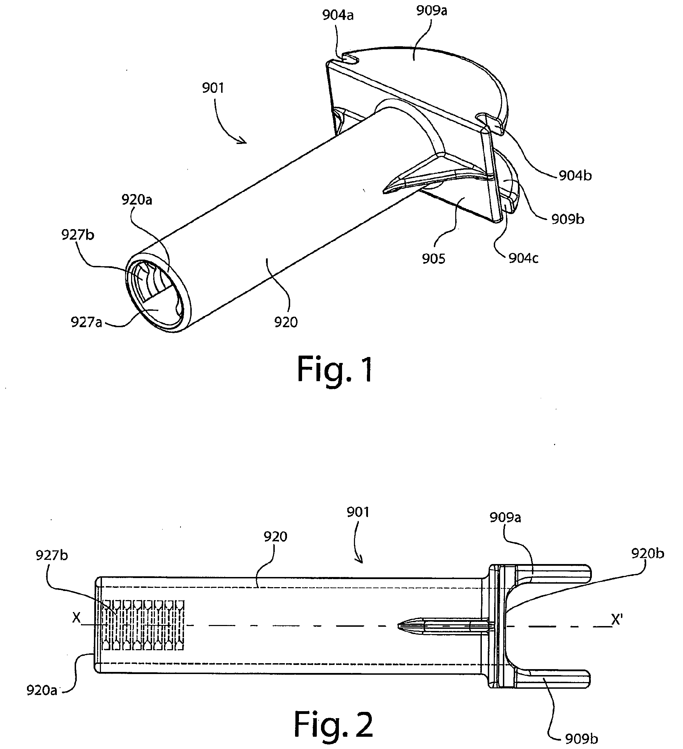

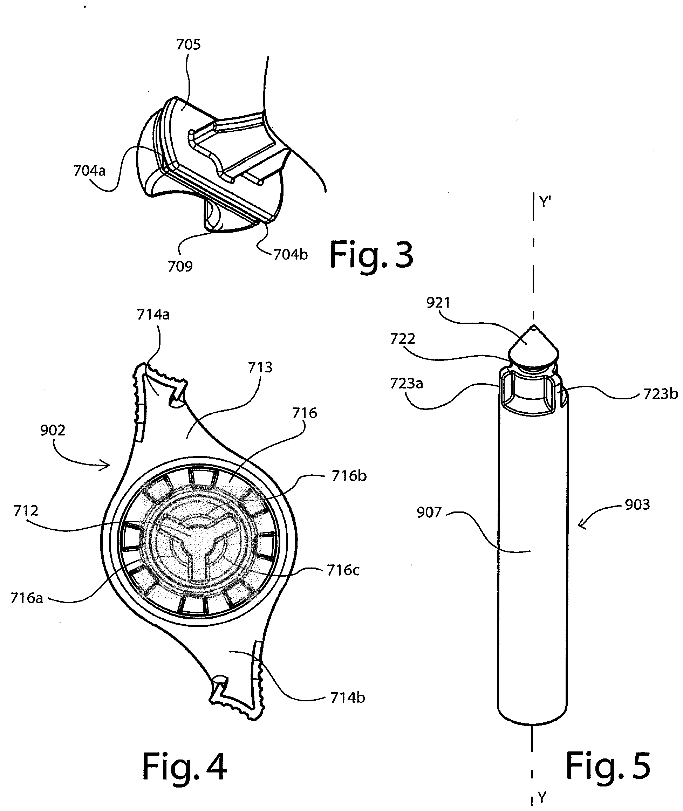

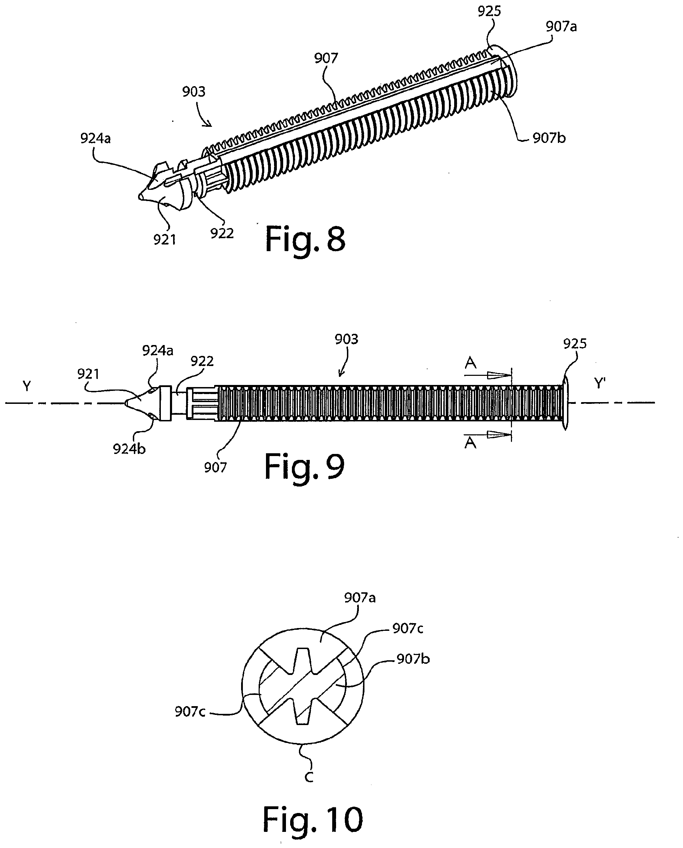

Le dispositif comporte une première pièce 901, illustrée en figures 1 et 2 et partiellement en figure 3, une deuxième pièce 902 illustrée en figure 4, 6, 7 et 7 et une troisième pièce 903 illustrée en figures 9 et 10.

La deuxième pièce 902 comporte une tête 716 tronconique, une base plane 713 et une gorge de section circulaire 711 entre la tête et la base. La base 713 est prolongée par deux leviers 714a et 714b qui s'étendent de part et d'autre de la tête 716 et sensiblement alignés. La tête 716 et la gorge 711 coopèrent avec la fourrure F2 pour clipser la deuxième pièce, mais grâce à la tête ronde et à la gorge circulaire, il est possible de faire tourner la deuxième pièce sur la fourrure F2 une fois clipsée.

La figure 8 illustre deuxième pièce 902 montée sur une fourrure F2.

La première pièce 901 comporte un tube 920 intérieurement cranté ; ce tube s'étend selon une direction X-X' à partir d'une base plane 905 de la première pièce 901 ; à l'opposé de cette base plane s'étendent deux oreilles 909a, 909b, qui comportent chacune deux encoches 904a, 904b, 904c, 904d à leur jonction avec la base plane 905, destinées à clipser la première pièce sur la fourrure F1.

Alternativement, comme illustré en figure 3, la première pièce 901 comporte des moyens qui lui permettent de coopérer avec la fourrure F1 afin de s'y clipser :
* une tête 709 dont les dimensions lui permettent de se loger dans la fourrure F1,
* une base plane 705 comportant une section rectangulaire dont une dimension est égale à l'écartement des raidisseurs de la fourrure F1,
* deux gorges rectilignes 704a, 704b sensiblement parallèles situées entre la base 705 et la tête 709, l'écartement du fond des gorges étant égal à l'écartement des bords de la fourrure F1.

Lorsque la tête 709 est appuyée contre la fourrure F1, les raidisseurs s'écartent et se clipsent sur la tête.

Il est à noter que dans ce mode de fixation la pièce 901 peut coulisser le long de la fourrure F1 une fois clipsée.

La troisième pièce 903 comporte une tige crantée 907 qui s'étend selon une direction Y-Y' ; cette tige comporte des rangées de crans 907b séparées par des gorges 907a, une pointe 921 à une première extrémité et une butée circulaire 925 à sa seconde extrémité.

La deuxième pièce 902 et la troisième pièce 903 comportent des moyens pour se clipser l'une sur l'autre.

**Dans un premier mode de réalisation** des moyens de clipsage, illustré en figures 4 et 5 :
- la troisième pièce 903 comporte, entre la pointe 921 et la tige crantée 907 (les crans ne sont pas représentés), une gorge annulaire 722 et trois ailettes radiales 723 a, 723b, 723c (non visible),
- la deuxième pièce 902 comporte une ouverture axiale traversante 712 comprenant trois languettes crantées résilientes 716a, 716b, 716c possédant un débattement radial qui s'étendent à partir de la périphérie de cette ouverture.

Lorsque la tige crantée 907 est présentée devant cette ouverture 712 à l'opposé de la tête 716 par sa pointe 921, la pointe repousse les languettes qui se referment dans la gorge 722, les ailettes 723a, 723b, 723c prenant place entre les languettes716a, 716b, 716c. La tige crantée 907 est ainsi à la fois solidarisé axialement et en rotation par rapport à la deuxième pièce 902, elle peut être entraînée en rotation par la deuxième pièce 902.

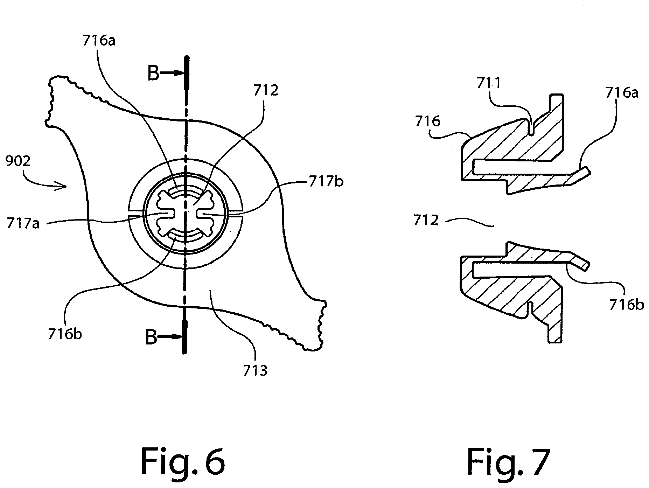

**Dans un second mode de réalisation** illustré en figures 6 à 9 :
- la troisième pièce 903 comporte une gorge annulaire 922 entre la pointe 921 et la tige crantée 907 et deux gorges rectilignes 924a et 924b qui s'étendent longitudinalement depuis la pointe jusqu'à la tige crantée 907,
- la deuxième pièce 902 comporte une ouverture axiale traversante 712 ainsi que deux languettes crantées résilientes 716a, 716b possédant un débattement radial, et deux ailettes rigides 717a, 717b qui s'étendent longitudinalement à partir de la périphérie de cette ouverture.

Lorsque la tige crantée 907 est présentée devant cette ouverture par sa pointe 921, la pointe repousse les languettes qui se referment dans la gorge 922, et les ailettes 717a et 717b prennent place dans les gorges 724a et 724b. La tige crantée 907est ainsi à la fois solidarisé axialement et en rotation par rapport à la deuxième pièce 902, elle peut être entraînée en rotation par la deuxième pièce 902.

La tige crantée 907 coulisse à l'intérieur du tube 920 lorsque les rangées de crans 907b, d'une pièce prennent place dans les gorges de l'autre pièce. Elles sont bloquées en translation lorsque les crans sont en prise après une rotation axiale. Il est cependant avantageux que la première et la troisième pièces comportent des moyens pour que cette rotation soit freinée ou bloquée pour que les deux pièces ne repassent pas facilement d'une position de blocage en translation à une position de coulissement. Par exemple, les rangées de crans peuvent comporter des butées entre les crans, en limite angulaire des crans.

De façon alternative, une section des crans ou des rainures entre crans n'est pas constante axialement ou angulairement, de sorte que la rotation des crans l'un sur l'autre provoque leur coincement une fois que les crans sont totalement en prise.

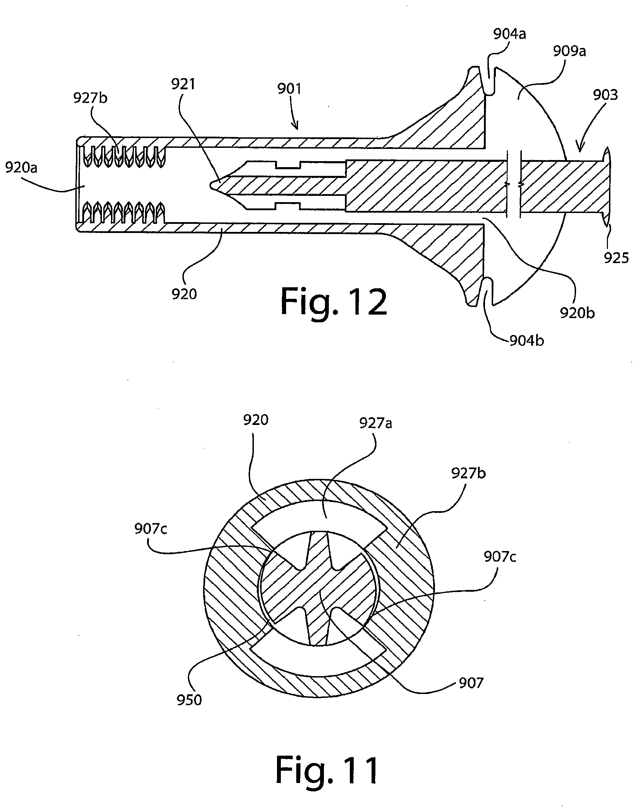

La figure 11 illustre un mode de réalisation de ces moyens. Les sommets des rangées de crans 907b s'inscrivent bien dans un cylindre C, mais le fond de rainure entre crans comporte un épaississement 907c en bordure de cran. La figure 12 illustre en coupe une tige crantée 907 dans un tube 920, les rangées de crans étant en prise l'une sur l'autre. Il existe un jeu 950 entre les sommets des crans du tube 920 et le fond de rainure de la tige crantée 907. Cependant l'épaississement 907c vient en butée sur un cran 927b du tube et provoque l'arrêt de la rotation de l'un sur l'autre.

Cette disposition n'est qu'une illustration des dispositions envisageables pour obtenir le blocage en rotation d'une pièce sur l'autre. Par exemple la section des crans d'une pièce pourrait ne pas être constante angulairement.

Le tube 920 n'a pas besoin d'être cranté tout le long de sa surface intérieure. La figure 12 illustre en coupe un tube 920d'une première pièce 901 qui ne comporte que huit rangées de crans 927b, situées au voisinage de sa première extrémité 920a. En effet, on a trouvé que huit rangées de crans en prise l'une sur l'autre était suffisant pour obtenir une bonne résistance à la pression et aux chocs éventuellement appliqués sur le parement.

La tige crantée 907 comporte à sa seconde extrémité une butée circulaire 925 dont le diamètre est supérieur à l'espace libre entre les sommets des crans du tube 920 et légèrement inférieur au diamètre du tube dans sa partie non crantée. Par ailleurs, le tube 920 présente une seconde ouverture 920b sur la base plane à l'opposé du tube 920, entre les oreilles 909a et 909b. Il est évident qu'une telle seconde ouverture peut exister quand la première pièce est dotée d'une tête 709.

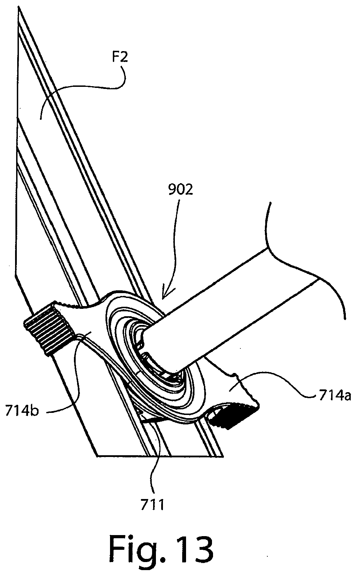

De cette façon, la tige crantée 907 peut être insérée dans le tube 920 par cette seconde ouverture 920b, comme illustré en figure 13. Elle ne peut pas sortir par la première ouverture 920a car la butée circulaire 925 ne peut pas franchir les crans 927b du tube 920, quelle que soit l'orientation axiale respective des deux pièces. Ainsi, lorsque ces deux pièces sont mises en prise l'une sur l'autre, on a l'assurance qu'elles seront en prise sur au moins huit rangées de crans.

De plus, le fait de disposer de la seconde ouverture 920b offre une plus grande latitude de réglage en écartement, la tige crantée 907 pouvant être rétractée jusqu'à l'âme de la fourrure F1 lorsque la première pièce 901 est clipsée dessus.

En pratique, le blocage en rotation de la première et de la troisième pièces est utile pour la fourniture d'un kit de fixation, dans lequel les deux pièces sont livrées l'une insérée et bloquée dans l'autre. Lors du réglage de l'écartement de la seconde et de la première pièce, le blocage en rotation est obtenu par les leviers 714a et 714b qui viennent en butée contre les flancs de la fourrure F2.

## Revendications

1. Dispositif (900) pour la fixation de deux objets (F1, F2) l'un à l'autre dans une position réglable en écartement, le dispositif étant pour la fixation d'un matériau isolant thermique et/ou phonique de bâtiment sur la face intérieure d'une cloison ou d'un mur, ledit dispositif comportant au moins une première (901) et une deuxième pièces (902),
- ladite première pièce (901) comprenant des moyens de liaison (709, 704a, 704b, 909a, 909b, 904a, 904b) avec un premier objet (F1), et comportant un tube (920) qui s'étend selon un premier axe (X-X') et comportant une première surface intérieure crantée (927b),
- ladite deuxième pièce (902) comprenant des moyens de liaison (716, 711) avec un second objet (F2),
**caractérisé en ce que :**
le dispositif comporte en outre une troisième pièce (903) distincte de ladite première et de ladite deuxième pièce, qui s'étend selon un second axe (Y-Y'), comportant une tige (907) comprenant une seconde surface crantée,
ladite troisième pièce et ladite deuxième pièce comportant des moyens qui coopèrent pour clipser axialement l'une sur l'autre et pour les solidariser en rotation,
ledit tube (920) et ladite troisième pièce (903) étant prévus, lorsque leurs axes respectifs sont sensiblement confondus, pour, dans une première position angulaire relative, coulisser l'une dans l'autre et pour, dans une seconde position angulaire relative, immobiliser en translation la première pièce et la troisième pièce l'une par rapport à l'autre, de façon à régler l'écartement entre lesdits objets.

2. Dispositif selon la revendication 1,
**caractérisé en ce que :**
les moyens de clipsage axial comportent :
une pointe terminale axiale (921) à une première extrémité de ladite troisième pièce (903), ladite deuxième pièce (902) comportant une ouverture (712) prévue pour recevoir ladite pointe terminale,
- des languettes résilientes (716a, 716b, 716c) qui s'étendent à l'intérieur de ladite ouverture à partir de sa périphérie, lesdites languettes possédant un débattement radial,
- une gorge annulaire (722, 922) prévue sur ladite troisième pièce pour recevoir lesdites languettes résilientes (716a, 716b, 716c).

3. Dispositif selon la revendication 2,
**caractérisé en ce que :**
les moyens de clipsage de ladite troisième pièce (903) comportent une gorge annulaire (722) prévue pour recevoir lesdites languettes résilientes (716a, 716b, 716c),
et **en ce que** les moyens de solidarisation en rotation de ladite troisième pièce comportent des ailettes (723a, 723b, 723c) qui s'étendent radialement sous ladite pointe terminale, lesdites ailettes étant prévues pour prendre place entre lesdites languettes (716a, 716b, 716c) lors du clipsage.

4. Dispositif selon la revendication 2,
**caractérisé en ce que :**
les moyens de solidarisation en rotation comportent des ailettes rigides (717a, 717b), qui s'étendent longitudinalement à l'intérieur de ladite ouverture à partir de sa périphérie et des gorges (924a, 924b) qui s'étendent à partir de la pointe terminale (921), lesdites gorges étant prévues pour recevoir lesdites ailettes (717a, 717b) lors du clipsage.

5. Dispositif selon l'une des revendications 1 à 4,
**caractérisé en ce que :**
les moyens de liaison de ladite deuxième pièce comprennent une tête (716) qui présente une section circulaire et une gorge sous tête (711) de section circulaire.

6. Dispositif selon l'une des revendications 1 à 5,
**caractérisé en ce que :**
ladite première pièce (901) comporte une base plane (705, 905),
et **en ce que** ledit tube (920) s'étend à partir d'une face de ladite base et est ouvert à une première extrémité (920a) distante de la base (705, 905).

7. Dispositif selon l'une des revendications 1 à 6,
**caractérisé en ce que** lesdits moyens de liaison de la première pièce (901) comprennent une tête (709) qui s'étend à partir de la base plane (705) à l'opposé dudit tube (920) et deux gorges (704a, 704b) sensiblement parallèles situées sur des côtés opposés de ladite tête.

8. Dispositif selon l'une des revendications 1 à 6,
**caractérisé en ce que** lesdits moyens de liaison de la première pièce (901) comprenant deux oreilles (909a, 909b) qui s'étendent à partir de la base plane (905) à l'opposé dudit tube (920), chaque oreille comprenant deux encoches (904a, 904b, 904c, 904d) situées à la jonction de chaque oreille respective et de ladite base plane.

9. Dispositif selon l'une des revendications 1 à 8,
**caractérisé en ce que :**
ladite première surface crantée de ladite première pièce (901) et ladite seconde surface crantée de ladite troisième pièce (903) comportent chacune au moins deux rangées longitudinales de crantages (907b, 927b) séparées l'une de l'autre par au moins deux gorges longitudinales (907a, 927a),
de façon que, dans ladite première position angulaire respective, les rangées de crantages d'une pièce peuvent coulisser dans les gorges de l'autre pièce, et dans ladite seconde position angulaire respective, les crans des rangées de crantages des deux pièces sont en prise les uns avec les autres.

10. Dispositif selon la revendication 9,
**caractérisé en ce que** :
lesdites première et seconde positions angulaires sont séparées de sensiblement un quart de tour.

11. Dispositif selon l'une des revendications 1 à 10,
**caractérisé en ce que :**
ladite première pièce (901) et ladite troisième pièce (903) comportent en outre des moyens de blocage en rotation respective.

12. Dispositif selon la revendication 11,
**caractérisé en ce que :**
lesdits moyens de blocage en rotation respective comportent au moins une butée, située entre les crans et en limite angulaire desdits crans, de façon à limiter le mouvement angulaire respectif des première et troisième pièces.

13. Dispositif selon la revendication 11,
**caractérisé en ce que** :
la section d'au moins un cran et la section d'au moins une rainure entre crans desdites première et troisième pièces ont des dimensions qui varient relativement l'une à l'autre de telle sorte que dans une rotation relative dans un sens de verrouillage, ledit cran vient se coincer dans ladite rainure.

14. Dispositif selon l'une des revendications 1 à 13,
**caractérisé en ce que** ledit tube (920) n'est cranté qu'au voisinage de son extrémité libre distante de la base plane (705, 905).

15. Dispositif selon la revendication 14,
**caractérisé en ce que** ledit tube (920) comporte un nombre de rangées de crans compris entre cinq et dix, de préférence égal à huit.

16. Dispositif selon l'une des revendications 1 à 15,
**caractérisé en ce que** ledit tube (920) présente une seconde ouverture (920b) sur la base (705, 905).

17. Dispositif selon l'une des revendications 1 à 16,
**caractérisé en ce que** ladite tige crantée (907) comporte à sa seconde extrémité opposée à ladite première extrémité une butée d'arrêt circulaire (925) dont le diamètre est compris entre le diamètre intérieur du tube (920) dans sa partie non crantée et le diamètre de l'espace libre entre les sommets des crantages du tube (927b).

18. Dispositif selon l'une des revendications précédentes,
**caractérisé en ce que :**
lesdits objets (F1, F2) sont des profilés comportant une section transversale en U dont les bords sont repliés l'un vers l'autre,
les bords repliés et lesdits moyens de liaison des première (901) et deuxième (902) pièces coopérant pour clipser l'une ou l'autre pièce sur lesdits profilés.

19. Système pour appliquer un matériau isolant sur une paroi comportant :
- au moins deux profilés (F1, F2),
- au moins un dispositif de fixation (900) selon l'une des revendications 1 à 18 pour fixer les deux profilés l'un à l'autre en réglant leur écartement en fonction de l'épaisseur du matériau isolant disposé entre les deux profilés.

20. Kit de fixation pour fixer un matériau isolant thermique et/ou phonique de bâtiment sur la face intérieure d'une cloison ou d'un mur, comprenant un dispositif (900) selon l'une des revendications 1 à 18, dans lequel la tige crantée (907) de la troisième pièce (903) est bloquée en rotation à l'intérieur du tube (920) de la première pièce (901) ; et
un matériau isolant pour être embroché sur la troisième pièce (903) une fois celle-ci immobilisée en translation avec la première pièce.

21. Procédé pour appliquer un matériau isolant sur une paroi utilisant un kit de fixation selon la revendication 20, comportant les étapes consistant à :
- clipser la première pièce (901) du dispositif sur un premier profilé (F1),
- extraire partiellement la tige crantée (907) du tube (920) de ladite première pièce par sa première extrémité (920a) et la bloquer en lui appliquant un mouvement de rotation,
- embrocher ledit matériau isolant sur la tige crantée (907) et le tube de la première pièce,
- clipser la deuxième pièce (902) sur la pointe terminale (921) de ladite tige crantée,
- clipser un deuxième profilé (F2) sur ladite deuxième pièce,
- régler l'écartement de la première pièce et de la deuxième pièce en faisant coulisser la tige crantée de la troisième pièce dans le tube de la première pièce,
- bloquer la première pièce et la deuxième pièce en appliquant un mouvement de rotation à la deuxième pièce.

## Patentansprüche

1. Vorrichtung (900), um zwei Objekte (F1, F2) in einer Position aneinander zu befestigen, die abstandsmäßig verstellbar ist, wobei die Vorrichtung für die Befestigung eines Wärme- und/oder Schalldämmmaterials für Gebäude auf der Innenseite einer Trennwand oder einer Wand ist, wobei die Vorrichtung mindestens ein erstes (901) und ein zweites Teil (902) aufweist,
- wobei das erste Teil (901) Mittel (709, 704a, 704b, 909a, 909b, 904a, 904b) zur Verbindung mit einem ersten Objekt (F1) umfasst sowie ein Rohr (920) aufweist, das sich entlang einer ersten Achse (X - X') erstreckt und eine erste mit Zähnen versehene innere Oberfläche (927b) aufweist,
- wobei das zweite Teil (902) Mittel (716, 711) zur Verbindung mit einem zweiten Objekt (F2) umfasst,
**dadurch gekennzeichnet, dass**
die Vorrichtung ferner ein sich vom ersten und vom zweiten Teil unterscheidendes drittes Teil (903) aufweist, das sich entlang einer zweiten Achse (Y - Y') erstreckt und eine Stange (907) aufweist, die eine zweite mit Zähnen versehene Oberfläche umfasst,
das dritte Teil und das zweite Teil Mittel aufweisen, die zusammenwirken, um das eine axial am anderen einzuschnappen und um sie drehgesichert festzulegen,
wobei das Rohr (920) und das dritte Teil (903), wenn ihre jeweiligen Achsen im Wesentlichen zusammenfallen, dazu vorgesehen sind, in einer ersten relativen Winkelposition ineinander zu gleiten, und in einer zweiten relativen Winkelposition das erste Teil und das dritte Teil bezüglich einander translationsmäßig festzulegen, um den Abstand zwischen den Objekten zu verstellen.

2. Vorrichtung nach Anspruch 1,
**dadurch gekennzeichnet, dass**
die Mittel zum axialen Einschnappen Folgendes aufweisen:
- eine axiale Endspitze (921) an einem ersten Ende des dritten Teils (903), wobei das zweite Teil (902) eine Öffnung (712) aufweist, die zur Aufnahme der Endspitze vorgesehen ist,
- federnde Zungen (716a, 716b, 716c), die sich im Innern der Öffnung von ihrem Umfang aus erstrecken, wobei die Zungen eine radiale Auslenkung aufweisen,
- eine ringförmige Auskehlung (722, 922), die am dritten Teil zur Aufnahme der federnden Zungen (716a, 716b, 716c) vorgesehen ist.

3. Vorrichtung nach Anspruch 2,
**dadurch gekennzeichnet, dass**
die Einschnappmittel des dritten Teils (903) eine ringförmige Auskehlung (722) aufweisen, die zur Aufnahme der federnden Zungen (716a, 716b, 716c) vorgesehen ist,
und dass die Mittel zur drehgesicherten Festlegung des dritten Teils Stege (723a, 723b, 723c) aufweisen, die sich radial unter der Endspitze erstrecken, wobei die Stege dazu vorgesehen sind, sich beim Einschnappen zwischen den Zungen (716a, 716b, 716c) zu platzieren.

4. Vorrichtung nach Anspruch 2,
**dadurch gekennzeichnet, dass**
die Mittel zur drehgesicherten Festlegung starre Stege (717a, 717b), die sich in Längsrichtung im Innern der Öffnung von ihrem Umfang aus erstrecken, und Auskehlungen (924a, 924b) aufweisen, die sich von der Endspitze (921) aus erstrecken, wobei die Auskehlungen zur Aufnahme der Stege (717a, 717b) beim Einschnappen vorgesehen sind.

5. Vorrichtung nach einem der Ansprüche 1 bis 4,
**dadurch gekennzeichnet, dass**
die Verbindungsmittel des zweiten Teils einen Kopf (716), der einen kreisförmigen Querschnitt aufweist, und eine Auskehlung (711) unter dem Kopf mit kreisförmigem Querschnitt umfassen.

6. Vorrichtung nach einem der Ansprüche 1 bis 5,
**dadurch gekennzeichnet, dass**
das erste Teil (901) eine ebene Basis (705, 905) aufweist und dass sich das Rohr (920) von einer Fläche der Basis aus erstreckt und an einem ersten, von der Basis (705, 905) entfernten Ende (920a) offen ist.

7. Vorrichtung nach einem der Ansprüche 1 bis 6,
**dadurch gekennzeichnet, dass** die Verbindungsmittel des ersten Teils (901) einen Kopf (709), der sich von der ebenen Basis (705) gegenüber dem Rohr (920) erstreckt, und zwei im Wesentlichen parallele Auskehlungen (704a, 704b) umfassen, die an den gegenüberliegenden Seiten des Kopfs angeordnet sind.

8. Vorrichtung nach einem der Ansprüche 1 bis 6,
**dadurch gekennzeichnet, dass** die Verbindungsmittel des ersten Teils (901) zwei Flügel (909a, 909b) umfassen, die sich von der ebenen Basis (905) gegenüber dem Rohr (920) erstrecken, wobei jeder Flügel zwei Kerben (904a, 904b, 904c, 904d) umfasst, die am Übergang jedes jeweiligen Flügels zu der ebenen Basis angeordnet sind.

9. Vorrichtung nach einem der Ansprüche 1 bis 8,
**dadurch gekennzeichnet, dass**
die erste mit Zähnen versehene Oberfläche des ersten Teils (901) und die zweite mit Zähnen versehene Oberfläche des dritten Teils (903) jeweils mindestens zwei Zahnlängsreihen (907b, 927b) aufweisen, die durch mindestens zwei Längsauskehlungen (907a, 927a) voneinander getrennt sind,
so dass die Zahnreihen eines Teils in der jeweiligen ersten Winkelposition in den Auskehlungen des anderen Teils gleiten können und die Zähnen der Zahnreihen der beiden Teile in der jeweiligen zweiten Winkelposition miteinander in Eingriff stehen.

10. Vorrichtung nach Anspruch 9,
**dadurch gekennzeichnet, dass**
die erste und die zweite Winkelposition durch im Wesentlichen eine Vierteldrehung getrennt sind.

11. Vorrichtung nach einem der Ansprüche 1 bis 10,
**dadurch gekennzeichnet, dass**
das erste Teil (901) und das dritte Teil (903) ferner Mittel zur Sperrung einer jeweiligen Drehung aufweisen.

12. Vorrichtung nach Anspruch 11,
**dadurch gekennzeichnet, dass**
die Mittel zur Sperrung einer jeweiligen Drehung mindestens einen Anschlag aufweisen, der zwischen den Zähnen und an der Winkelgrenze der Zähne angeordnet ist, um die jeweilige Winkelbewegung des ersten und des dritten Teils zu begrenzen.

13. Vorrichtung nach Anspruch 11,
**dadurch gekennzeichnet, dass**
der Querschnitt mindestens eines Zahns und der Querschnitt mindestens einer Rille zwischen Zähnen des ersten und des dritten Teils Abmessungen haben, die zueinander relativ variieren, so dass sich der Zahn bei einer Relativdrehung in Verriegelungsrichtung in der Rille verklemmt.

14. Vorrichtung nach einem der Ansprüche 1 bis 13,
**dadurch gekennzeichnet, dass** das Rohr (920) nur in der Nähe seines von der ebenen Basis (705, 905) entfernten freien Endes mit Zähnen versehen ist.

15. Vorrichtung nach Anspruch 14,
**dadurch gekennzeichnet, dass** das Rohr (920) eine Anzahl von Zahnreihen umfasst, die zwischen fünf und zehn liegt und vorzugsweise gleich acht ist.

16. Vorrichtung nach einem der Ansprüche 1 bis 15,
**dadurch gekennzeichnet, dass** das Rohr (920) eine zweite Öffnung (920b) an der Basis (705, 905) aufweist.

17. Vorrichtung nach einem der Ansprüche 1 bis 16,
**dadurch gekennzeichnet, dass** die mit Zähnen versehene Stange (907) an ihrem dem ersten Ende gegenüberliegenden zweiten Ende einen kreisförmigen Sperranschlag (925) aufweist, dessen Durchmesser zwischen dem inneren Durchmesser des Rohrs (920) an seinem nicht mit Zähnen versehenen Teil und dem Durchmesser des freien Raums zwischen den Scheiteln der Zähne des Rohrs (927b) liegt.

18. Vorrichtung nach einem der vorhergehenden Ansprüche,
**dadurch gekennzeichnet, dass**
die Objekte (F1, F2) Profile sind, die einen U-förmigen Querschnitt aufweisen und deren Ränder zueinander umgeschlagen sind, wobei die umgeschlagenen Ränder und die Verbindungsmittel des ersten (901) und des zweiten (902) Teils zusammenwirken, um das eine oder das andere Teil an den Profilen einzuschnappen.

19. System zum Anbringen eines Dämmmaterials an einer Wand, das Folgendes aufweist:
- mindestens zwei Profile (F1, F2),
- mindestens eine Befestigungsvorrichtung (900) nach einem der Ansprüche 1 bis 18 zum Befestigen der beiden Profile aneinander unter Verstellen ihres Abstands in Abhängigkeit von der Dicke des zwischen den beiden Profilen angeordneten Dämmmaterials.

20. Befestigungsset zum Befestigen eines Wärme- und/oder Schalldämmmaterials für Gebäude auf der Innenseite einer Trennwand oder einer Wand, umfassend eine Vorrichtung (900) nach einem der Ansprüche 1 bis 18, wobei die mit Zähnen versehene Stange (907) des dritten Teils (903) im Innern des Rohrs (920) des ersten Teils (901) drehgesperrt ist; und
ein Dämmmaterial, das dafür vorgesehen ist, auf dem dritten Teil (903) aufgespießt zu werden, nachdem dieses in Translation mit dem ersten Teil immobilisiert ist.

21. Verfahren zum Anbringen eines Dämmmaterials an einer Wand unter Verwendung eines Befestigungssets nach Anspruch 20, wobei das Verfahren die Schritte aufweist, die aus Folgendem bestehen:
- Einschnappen des ersten Teils (901) der Vorrichtung an einem ersten Profil (F1),
- partielles Herausziehen der mit Zähnen versehenen Stange (907) aus dem Rohr (920) des ersten Teils aus dessen erstem Ende (920a) und Sperren dieser Stange, indem sie mit einer Drehbewegung beaufschlagt wird,
- Aufspießen des Dämmmaterials auf der mit Zähnen versehenen Stange (907) und dem Rohr des ersten Teils,
- Einschnappen des zweiten Teils (902) an der Endspitze (921) der mit Zähnen versehenen Stange,
- Einschnappen eines zweiten Profils (F2) an dem zweiten Teil,
- Verstellen des Abstands des ersten Teils und des zweiten Teils, indem die mit Zähnen versehene Stange des dritten Teils im Rohr des ersten Teils geschoben wird,
- Sperren des ersten Teils und des zweiten Teils unter Beaufschlagung des zweiten Teils mit einer Drehbewegung.

## Claims

1. Device (900) for the attaching of two objects (F1, F2) together in a position that can be adjusted in terms of separation, the device being for the attaching of a thermal and/or sound insulating building material on the inside face of a partition or of a wall, said device comprising at least one first (901) and one second part (902),
- said first part (901) comprising means for linking (709, 704a, 704b, 909a, 909b, 904a, 904b) with a first object (F1), and comprising a tube (920) that extends along a first axis (X-X') and comprising a first notched inside surface (927b),
- said second part (902) comprising means for linking (716, 711) with a second object (F2),
**characterised in that**:
the device further comprises a third part (903) separate from said first and second parts, that extends along a second axis (Y-Y'), comprising a rod (907) comprising a second notched surface,
said third part and said second part comprising means that cooperate in order to axially clip onto one another and in order to make them integral in rotation,
said tube (902) and said third part (903) being provided, when their respective axes are substantially confounded, to, in a first relative angular position, slide into one another and to, in a second relative angular position, immobilise in translation the first part and the third part with respect to one another, in such a way as to adjust the separation between said objects.

2. Device according to claim 1,
**characterised in that**:
the means for axial clipping comprise:
an axial terminal tip (921) at a first end of said third part (903), said second part (902) comprising an opening (712) provided to receive said terminal tip,
- resilient tabs (716a, 716b, 716c) that extend inside said opening starting from its periphery, said tabs having a radial offset,
- an annular groove (722, 922) provided on said third part to receive said resilient tabs (716a, 716b, 716c).

3. Device according to claim 2,
**characterised in that**:
the means for clipping said third part (903) comprise an annular groove (722) provided to receive said resilient tabs (716a, 716b, 716c),
and **in that** the means for making integral in rotation of said third part comprise vanes (723a, 723b, 723c) that extend radially under said terminal tip, said vanes being provided to take position between said tabs (716a, 716b, 716c) during the clipping.

4. Device according to claim 2,
**characterised in that**:
the means for making integral in rotation comprise rigid vanes (717a, 717b), that extend longitudinally inside said opening starting from its periphery and grooves (924a, 924b) that extend starting from the terminal tip (921), said grooves being provided in order to receive said vanes (717a, 717b) during the clipping.

5. Device according to one of claims 1 to 4,
**characterised in that**:
the means for linking of said second part comprise a head (716) that has a circular section and a groove under the head (711) of circular section.

6. Device according to one of claims 1 to 5,
**characterised in that**:
said first part (901) comprises a flat base (705, 905),
and **in that** said tube (920) extending from a face of said base and is open to a first end (920a) separate from the base (705, 905).

7. Device according to one of claims 1 to 6,
**characterised in that** said means for linking of the first part (901) comprise a head (709) that extends from the flat base (705) opposite said tube (920) and two substantially parallel grooves (704a, 704b) located on opposite sides of said head.

8. Device according to one of claims 1 to 6,
**characterised in that** said means of linking of the first part (901) comprise two ears (909a, 909b) that extend from the flat base (905) opposite said tube (920), with each ear comprising two indentations (904a, 904b, 904c, 904d) located at the junction of each respective ear and of said base plane.

9. Device according to one of claims 1 to 8,
**characterised in that**:
said first notched surface of said first part (901) and said second notched surface and of said third part (903) each comprise at least two longitudinal rows of notchings (907b, 927b) separated from one another by at least two longitudinal grooves (907a, 927a),
in such a way that, in said first respective angular position, the rows of notchings of a part can slide in the grooves of the other part, and in said second respective angular position, the notches of the rows of notchings of the two parts are engaged with one another.

10. Device according to claim 9,
**characterised in that**:
said first and second angular positions are separated by substantially one quarter turn.

11. Device according to one of claims 1 to 10,
**characterised in that**:
said first part (901) and said third part (903) further comprise means for blocking in respective rotation.

12. Device according to claim 11,
**characterised in that**:
said means for blocking in respective rotation comprise at least one abutment, located between the notches and at the angular limit of said notches, in such a way as to limit the respective angular movement of the first and third parts.

13. Device according to claim 11,
**characterised in that**:
the section of at least one notch and the section of at least one groove between notches of said first and third parts have dimensions that vary relatively from one another in such a way that in a relative rotation in a locking direction, said notch becomes wedged in said groove.

14. Device according to one of claims 1 to 13,
**characterised in that** said tube (920) is notched only in the vicinity of its separate free end from the flat base (705, 905).

15. Device according to claim 14,
**characterised in that** said tube (920) comprises a number of rows of notches between five and ten, preferably equal to eight.

16. Device according to one of claims 1 to 15,
**characterised in that** said tube (920) has a second opening (920b) on the base (705, 905).

17. Device according to one of claims 1 to 16,
**characterised in that** said notched rod (907) comprises at its second end opposite said first end a circular stop abutment (925) of which the diameter is between the inside diameter of the tube (920) in its non-notched portion and the diameter of the free space between the tops of the notchings of the tube (927b).

18. Device according to one of the preceding claims,
**characterised in that**:
said objects (F1, F2) are profiles comprising a U-shaped transverse section of which the edges are folded towards one another,
the folded edges and said means of linking of the first (901) and second (902) parts cooperating in order to clip one or the other part on said profiles.

19. System for applying an insulating material on a wall comprising:
- at least two profiles (F1, F2),
- at least one device for fastening (900) according to one of claims 1 to 18 in order to fasten the two profiles together by adjusting their separation according to the thickness of the insulating material arranged between the two profiles.

20. Kit for fastening for fastening a thermal and/or sound insulating building material on the inside face of a partition or of a wall, comprising a device (900) according to one of claims 1 to 18, wherein the notched rod (907) of the third part (903) is blocked in rotation inside the tube (920) of the first part (901); and
an insulating material in order to be impaled on the third part (903) once the latter is immobilised in translation with the first part.

21. Method for applying an insulating material on a wall using a fastening device according to claim 20, comprising the steps consisting in:
- clipping the first part (901) of the device on a first profile (F1),
- partially extracting the notched rod (907) from the tube (920) of said first part by its first end (920a) and blocking it by applying a movement of rotation to it,
- impaling said insulating material on the notched rod (907) and the tube of the first part,
- clipping the second part (902) on the end tip (921) of said notched rod,
- clipping a second profile (F2) onto said second part,
- adjusting the separation of the first part and of the second part by sliding the notched tube of the third part into the tube of the first part,
- blocking the first part and the second part by applying a movement of rotation to the second part.
